# EUROPEAN PATENT APPLICATION

(11) **EP 4 446 478 A1**
(43) Date of publication of application: **16.10.2024**
(21) Application number: 22914230.2
(22) Date of filing: 13.12.2022
(51) Int. Cl.: C25F 3/16, C09G 1/16

(54) **ION EXCHANGE RESIN APPLIED TO DRY ELECTROPOLISHING OF METAL WORKPIECES AND USE THEREOF**

(30) Priority: 28.12.2021 CN 202111626740; 20.05.2022 CN 202210552048
(71) Applicant: Guangdong Weshining Technology Co., Ltd., Foshan, Guangdong 528051 (CN)
(72) Inventor: PANG, Hao, Guangzhou, Guangdong 510665 (CN); LIAO, Bing, Guangzhou, Guangdong 510665 (CN); HONG, Peiping, Guangzhou, Guangdong 510665 (CN); YU, Yue, Guangzhou, Guangdong 510665 (CN)
(74) Representative: Patentwerk B.V.
(86) International application number: PCT/CN2022/138712
(87) International publication number: WO 2023/124975

(57) **Abstract**

Disclosed are an ion exchange resin applied to dry electropolishing of metal workpieces and a use thereof. The ion exchange resin is an organic, slightly acidic cation exchange resin with a porous structure; the ion exchange resin contains an electrolyte in the pores and/or on the surface. Compared to mechanical polishing and electropolishing, the ion exchange resin, when applied to the dry electropolishing of a metal workpiece, can fully polish parts that are not easily accessible for grinding, and does not require a large amount of chemical oxidant or electrolyte during polishing, thus being environmentally friendly and safe. In addition, the modified ion exchange resin can be regenerated after a period of use, greatly increasing the service life and reducing costs.

## Description

### TECHNICAL FIELD

The present disclosure relates to the technical field of metal surface treatment, and in particular to an ion exchange resin used in solid electrolytic polishing of metal a workpiece and a use method thereof.

### BACKGROUND

With the transformation and upgrading of the manufacturing industry, metal polishing and grinding have been diversified. Common polishing and grinding methods include physical polishing, chemical polishing and composite polishing.

Physical polishing is generally mechanical grinding and polishing, which is a process in which protrusions of the polished surface are removed by cutting, abrasion or plastic deformation to obtain a smooth and bright surface. Chemical polishing is a process that uses chemical corrosion (electrochemical corrosion) to preferentially oxidize the tiny metal protrusions on the polished surface into metal ions for etching, thereby improving the roughness of the metal surface and obtaining a smooth and bright surface.

Mechanical grinding and polishing is time-consuming and inefficient, and it is difficult to achieve a high gloss effect on corners, gaps and other parts. Chemical polishing solves the technical problems that are difficult to solve with mechanical polishing to a certain extent. However, a large amount of chemical oxidizing agents or electrolytes cause harm to the operator's health. In addition, a large amount of waste liquid generated after polishing. If not handled properly, it will cause serious environmental pollution.

CN109415839A discloses a method for smoothing and polishing metals via ion transport by free solid bodies, and solid bodies for performing the method, which smooths and polishes metal workpieces through ion transport, wherein the disclosed spherical particles are a sulfonated styrenedivinylbenzene resin. However, due to the steric hindrance effect, ion complexation and other factors, the smooth polishing effect of the resin on metal surfaces cannot be controlled. For example, for some metals that are easy to polish, it will cause excessive polishing and defects on the surface of precision parts of the metal sample. For some metals that are difficult to polish, it will result in incomplete polishing and poor surface gloss.

CN113699579A discloses a metal polishing method, comprising the following steps: firstly performing aqueous solution electrolytic polishing on a polished workpiece under a mild electrolysis condition to enable the surface of the polished workpiece to reach an initial brightness, and then conducting composite electrolytic polishing on the polished workpiece with the surface reaching the initial brightness using a spherical solid electrolyte, such that the surface of the polished workpiece reaches a final mirror surface brightness. Although the surface with a mirror surface brightness can be achieved, the process is relatively complicated. For the composite electrolytic polishing, the mechanical action and the electrolytic action act at the same point at the same time. Due to a huge difference in hardness between particles and metal samples, when the mechanical action is too severe, the spherical solid will be destroyed, such that the spherical solid cannot be recycled, and the cost of the composite electrolytic polishing will increase.

### SUMMARY

The present disclosure aims to solve at least one of the above technical problems existing in the existing technology. To this end, a first object of the present disclosure is to provide an ion exchange resin used in solid electrolytic polishing of a metal workpiece(s); a second object of the present disclosure is to provide a method for preparing the ion exchange resin; and a third object of the present disclosure is to provide a method for solid electrolytic polishing of a metal workpiece(s) using the ion exchange resin.

In order to achieve the above objects, the technical solutions adopted by the present disclosure are as follows:
A first aspect of the present disclosure provides an ion exchange resin used in solid electrolytic polishing of a metal workpiece(s), where the ion exchange resin is an organic weak acid-type cation exchange resin with a porous structure; and the ion exchange resin contains an electrolyte in pores and/or on the surface of the ion exchange resin.

Preferably, the organic weak acid-type cation exchange resin includes at least one of an acrylic acid-type cation exchange resin, an oxalic acid-type cation exchange resin, a citric acid-type cation exchange resin, a salicylic acid-type cation exchange resin, or an ethylene diamine tetraacetic acid (EDTA)-type cation exchange resin.

Preferably, the acrylic acid-type cation exchange resin is a carboxylic acid-type ion exchange resin containing a COOH group or a COO⁻ group;
A ratio of the COOH group and the COO⁻ group is adjusted by a type of raw materials for preparing the ion exchange resin and/or a pH value of the electrolyte.

Preferably, the ion exchange resin has a particle size ranging from 0.01 mm to 10 mm; more preferably, the ion exchange resin has a particle size ranging from 0.27 mm to 4 mm.

Preferably, the electrolyte is able to adjust conductivity of the ion exchange resin.

Preferably, the ion exchange resin has a volume resistance ranging from 0.01 MΩ to 5 MS2; more preferably, the ion exchange resin has a volume resistance ranging from 0.05 MΩ to 4 MS2.

Preferably, an electrolyte mass content inside the pores and/or on the surface of the ion exchange resin is 15% to 80%; more preferably, the electrolyte mass content inside the pores and/or on the surface of the ion exchange resin is 30% to 65%.

Preferably, the electrolyte includes at least one of water, acid solution, alkaline solution, or salt solution.

Preferably, in the electrolyte, an acid of the acid solution includes at least one of H₂SO₄, HCl, H₃PO₄, HNO₃, or HF.

Preferably, in the electrolyte, an alkali of the alkaline solution includes at least one of NaOH or KOH.

Preferably, in the electrolyte, a salt of the salt solution includes at least one of soluble chlorine salt, fluoride salt, sulfate, phosphate, nitrate, or EDTA salt.

A second aspect of the present disclosure provides a method for preparing an ion exchange resin used in solid electrolytic polishing of a metal workpiece(s) according to the first aspect of the present disclosure, including the steps of: soaking an organic weak acid-type cation exchange resin with a porous structure in an electrolyte, adjusting a pH value of the electrolyte, and then filtering and volatilizing same to obtain the ion exchange resin used in solid electrolytic polishing of a metal workpiece(s).

Preferably, in the preparation method, after adjusting the pH value of the electrolyte, the pH value of the electrolyte in the organic weak acid-type cation exchange resin is greater than 4.

A third aspect of the present disclosure provides a method for solid electrolytic polishing of a metal workpiece using the ion exchange resin according to the first aspect of the present disclosure, including the steps of:
S1: placing an ion exchange resin used in solid electrolytic polishing of metal workpiece and the metal workpiece to be polished in an electrochemical polishing device;
   wherein the metal workpiece to be polished are connected to a positive electrode for a power supply of the electrochemical polishing device, and the ion exchange resin is connected to a negative electrode for the power supply of the electrochemical polishing device; and
S2: powering the electrochemical polishing device on to perform electrolytic polishing, wherein the metal workpiece to be polished and the ion exchange resin undergo relative frictional motion during electrolytic polishing.

The beneficial effects of the present disclosure are provided as follows:
The ion exchange resin of the present disclosure is an organic weak acid-type cation exchange resin. After the metal workpieces are powered on, in addition to electrostatic adsorption between positive and negative charges, the organic weak acid-type cation exchange resin can also fully chelate with cations dissociated from the metal workpieces, and it is easier to adsorb metal ions due to a smaller steric hindrance. After the organic weak acid-type cation exchange resin absorbs metal ions, it is difficult for the metal ions to escape due to complexation, thereby effectively improving its polishing efficiency.

In addition, the organic weak acid-type cation exchange resin can adjust the ratio of COOH group and COO⁻ group through the pH of the electrolyte solution. More COO⁻ groups result in a stronger adsorption capacity for metal ions and a better the polishing effect. This can adjust a polishing rate and a polishing intensity, thereby controlling the polishing effect of metal workpiece.

The ion exchange resin provided by the present disclosure is used in solid electrolytic polishing of metal workpiece. Compared to mechanical polishing and electrolytic polishing, the ion exchange resin can fully polish parts that are not easily accessible for grinding, and does not require a large amount of chemical oxidizing agents and electrolytes during polishing, thus being environmentally friendly and highly safe. In addition, the modified ion exchange resin can be regenerated after a period of use, greatly increasing the service life and reducing costs.

### BRIEF DESCRIPTION OF DRAWINGS

FIG. 1 is a scanning electron microscope image of the ion exchange resin;
FIG. 2 is a pore diameter distribution map of the ion exchange resin by BET method;
FIG. 3 is X-ray photoelectron spectra of the ion exchange resin;
FIG. 4 is a schematic diagram of the electrolytic polishing process with the ion exchange resin according to the present disclosure;
FIG. 5 is a scanning electron microscope image of a metal workpiece before polishing;
FIG. 6 is a scanning electron microscope image of a metal workpiece polished using a COOH-type resin;
FIG. 7 is a scanning electron microscope image of a metal workpiece polished using 10 g COOH-type resin and 0.5 g NaOH sample;
FIG. 8 is a scanning electron microscope image of a metal workpiece polished using a COONa-type resin;
FIG. 9 shows a surface morphology of a metal workpiece before polishing;
FIG. 10 shows a surface morphology of a metal workpiece after polishing using 10 g COOH-type resin and 0.5 g NaOH sample;
FIG. 11 shows a surface morphology of a metal workpiece after polishing using a COONa-type resin.

### DETAILED DESCRIPTION

The content of the present disclosure will be further described in detail below through specific examples. Unless otherwise specified, the raw materials, reagents or devices used in the examples can be obtained from conventional commercial sources, or can be obtained through existing technical methods. Unless otherwise stated, assays or test methods are routine in the art.

An ion exchange resin provided by the present disclosure is used in solid electrolytic polishing of a metal workpiece(s). It should be noted that electrolytic polishing means immersing a metal workpiece(s) in a special chemical solution composed of various components, oxidizing the metal workpiece(s) relying on high chemical potential energy to obtain a smooth and bright surface, while solid electrolytic polishing means contacting conductive solid particles instead of an electrolyte with the metal workpiece(s) to be polished, thereby polishing the surface of the metal workpiece(s). It should be noted here that although the solid particles are in contact with the metal workpiece(s) to be polished, a relative motion rate of this contact is low, and a hardness of the solid particles is lower than that of the metal workpiece(s), so no physical mechanical polishing process occurs.

The solid particles provided by embodiments of the present disclosure are organic weak acid-type cation exchange resins with porous structures, where the organic weak acid-type cationic exchange resin contains a certain amount of electrolyte inside the pores and/or on the surface of the ion exchange resin.

The porous structure allows the organic weak acid-type cation exchange resin to first lose the electrolyte on the surface and then the electrolyte in the pores during the drying process after being wetted by the electrolyte solution. The porous structure can ensure that the organic weak acid-type cation exchange resin still has good conductivity after completely losing the surface electrolyte.

The organic weak acid-type cation exchange resin in embodiments of the present disclosure includes an oxalic acid-type cation exchange resin, an acrylic acid-type cation exchange resin, a citric acid-type cation exchange resin, a salicylic acid-type cation exchange resin or an ethylene diamine tetraacetic acid (EDTA)-type cation exchange resin.

Specifically, a carboxylic acid-type ion exchange resin is taken as an example for illustration. The ion exchange resin is modified with a carboxylic acid group, that is, a COOH group. A ratio of the COOH group and the COO⁻ group on the ion exchange resin can be adjusted by a type of raw materials for preparing the ion exchange resin and/or a pH value of the electrolyte. In the following description, the ion exchange resin containing a COOH group is briefly described as a COOH-type ion exchange resin, and the ion exchange resin containing a COO⁻ group is briefly described as a COO⁻-type ion exchange resin.

In an embodiment of the present disclosure, the acrylic acid-type cation exchange resin is prepared by polymerizing an active acrylate monomer, a common monomer and a cross-linking monomer.

For example, the active acrylate monomer includes carboxyl groups, such as selected from acrylic acid, methacrylic acid, etc., and a mass part of the active acrylate monomer can be 50 to 90 parts.

The common monomer includes at least one of acrylic monomers or alkene double bond monomers, such as at least one selected from methyl acrylate, ethyl acrylate, n-butyl acrylate, 2-ethylhexyl acrylate, n-octyl acrylate, isooctyl acrylate, isobornyl acrylate, methyl methacrylate, ethyl methacrylate, butyl methacrylate, isobornyl methacrylate, ethylene, propylene, styrene, or acrylonitrile. A mass part of the common monomer can be 10 to 50 parts.

The cross-linking monomer includes at least one of multifunctional acrylate monomers or polyene double bond monomers, such as at least one selected from ethylene glycol diacrylate, diethylene glycol diacrylate, propylene glycol diacrylate, dipropylene glycol diacrylate, tri(propylene glycol) diacrylate, hexanediol diacrylate, bisphenol A glycerolate dimethacrylate, glycerol 1,3-diglycerolate diacrylate, trimethylolpropane trimethacrylate, triallyl isocyanurate, or divinylbenzene. A mass part of the cross-linking monomer can be 1 to 20 parts.

The active acrylate monomer is used to chelate metal ions, and the cross-linking monomer is used to improve the hardness, strength, solvent resistance, stability, etc. of the resin. No slagging during use, and the service life is extended.

A material used for solid electrolytic polishing of a metal workpiece(s) in the embodiment of the present disclosure adopts polyacrylate porous resin microspheres with carboxyl groups, which are prepared by suspension polymerization from acrylic acid (55 parts by mass), methyl methacrylate (35 parts by mass), bisphenol A glycerolate dimethacrylate (10 parts by mass), azobisisobutyronitrile (2 parts by mass) as an initiator, toluene as an oil phase, and sodium chloride aqueous solution as a water phase, gelatin and polyvinyl alcohol as a dispersant, and paraffin as a porogen. By screening through sieves of different mesh sizes, polyacrylate porous resin microspheres with carboxyl groups with corresponding particle sizes are obtained.

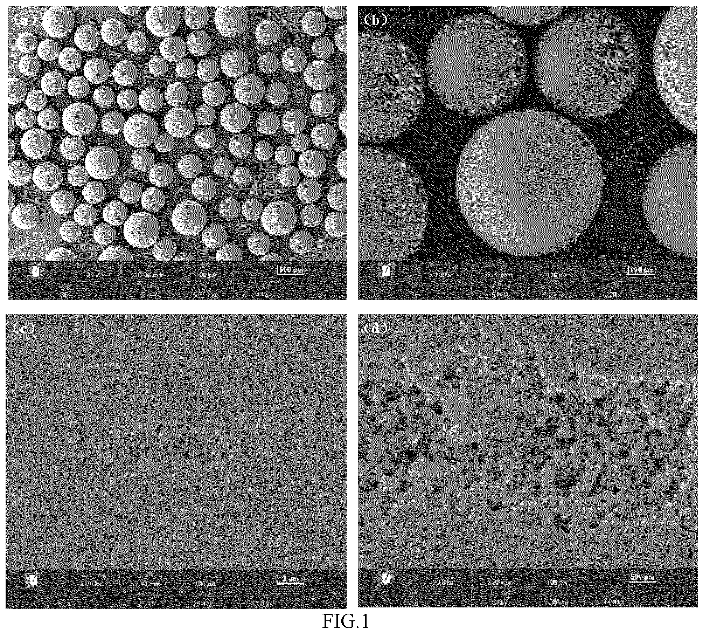

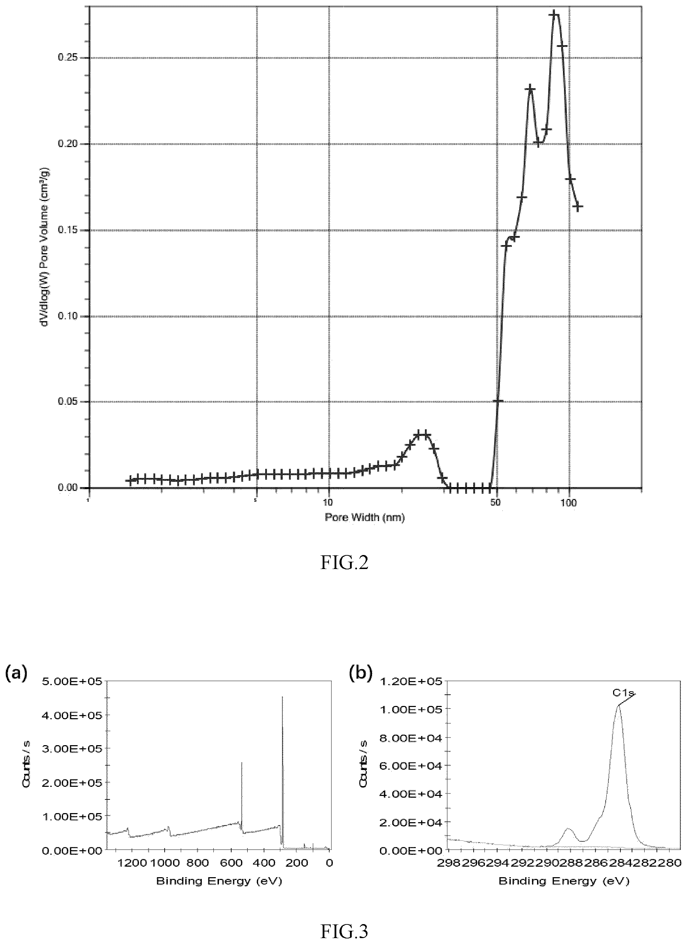

A scanning electron microscope (SEM) image of the prepared carboxylic acid-type ion exchange resin with porous structure is shown in FIG. 1. Panel (a) of FIG. 1 is a scanning electron microscope image of a carboxylic acid-type ion exchange resin with a porous structure magnified 44 times; Panel (b) of FIG. 1 is a scanning electron microscope image of a carboxylic acid-type ion exchange resin with a porous structure magnified 220 times; Panel (c) of FIG. 1 is a scanning electron microscope image of a carboxylic acid-type ion exchange resin with a porous structure magnified 11,000 times; and Panel (d) of FIG. 1 is a scanning electron microscope of a carboxylic acid-type ion exchange resin with a porous structure magnified 44,000 times. The ion exchange resin has a particle size ranging from 0.01 mm to 10 mm, preferably 0.27 mm to 4 mm. FIG. 1 further shows a surface structure of the ion exchange resin. It can be seen that the resin is formed by accumulation of small particles of about 50 to100 nm. A porous structure is formed within and between particles, which can adsorb and accommodate more metal ions. FIG. 2 is a pore diameter distribution map of the ion exchange resin by BET method. As shown in FIG. 2, the pore sizes of the porous structure of the ion exchange resin are mainly 25 nm and 90 nm.

In order to further confirm that the porous structure ion exchange resin is modified with carboxylic acid groups, X-ray photoelectron spectroscopy (XPS) energy spectra test were conducted on the porous structure ion exchange resin. FIG. 3 is X-ray photoelectron spectra of the ion exchange resin, where panel (a) of FIG. 3 is a full spectrum and panel (b) of FIG. 3 is a C1s fine spectrum. It can be seen from FIG. 3 that peak shapes at 280 eV, 530 eV, 980 eV and 1221 eV are respectively the 1s peak of carbon element, the 1s peak of oxygen element, the Auger peak of carbon element, and the Auger peak of oxygen element. It is determined that the ion exchange resin mainly contains two elements: carbon and oxygen. Further, it can be seen from the C1s fine spectrum that the peak at 288 eV confirms that the resin is modified with carboxylic acid groups.

The carboxylic acid-type ion exchange resin with a porous structure was soaked in an electrolyte solution and then dried to obtain an organic weak acid-type ion exchange resin used in solid electrolytic polishing of a metal workpiece(s). The ratio of COOH groups and COO⁻ groups in the carboxylic acid-type ion exchange resin can be adjusted by adjusting the pH of the electrolyte solution. An electrolyte in the electrolyte solution is at least one of acid, alkali or salt. Among them, the acid in the electrolyte solution is at least one of H₂SO₄, HCl, H₃PO₄, HNO₃, or HF, the alkali is at least one of NaOH or KOH, and the salt is at least one of soluble chlorine salt, fluoride salt, sulfate, phosphate, nitrate or EDTA salt. It should be noted here that since the embodiment of the present disclosure adopts the step of soaking and adsorbing first and then volatilizing, if the electrolyte solution used is a salt solution, a volatilization speed of the electrolyte solute is generally slower than the volatilization speed of the solvent, so the actual concentration of the electrolyte solution inside the pores of the ion exchange resin will be slightly higher than the concentration of the initially soaked electrolyte solution. If the electrolyte solution used is an alkaline solution and the ion exchange resin uses a COOH-type ion exchange resin, the reaction between alkali and carboxylic acid will cause the actual concentration of the electrolyte solution inside the pores of the final ion exchange resin to be much lower than the concentration of the electrolyte solution initially soaked, or even 0. The same applies to acid solutions and COO⁻-type ion exchange resins.

Considering the neutralization reaction between acid solution and COO⁻-type ion exchange resin, alkali solution and COOH-type ion exchange resin, in the embodiment of the present disclosure, in order to adjust the ratio of the COOH groups and COO⁻ groups, the selected electrolyte is NaOH solution, which was washed with a large amount of water after the reaction was completed, such that the pH of the final solution completely reflects the ratio of the COOH groups and COO⁻ groups in the ion exchange resin. The greater the pH, the higher the ratio of the COO⁻groups.

In order to further verify the influence of COOH groups and COO⁻ groups on the ion exchange performance of the ion exchange resin, ion exchange experimental tests were conducted. Since the metal workpieces used in the solid electrolytic polishing test are chromium-cobalt alloys, a cobalt salt solution (the results of nickel salt, copper salt, and iron salt are similar, and different metal salts can be used for different metal substrates) were used for ion exchange experiments. The ion concentration was measured by Inductively Coupled Plasma spectroscopy (ICP). Specifically, the ion exchange resin of the same mass was soaked in cobalt aqueous solution of equal concentration and volume. At the same time, a strong acid-type cation exchange resin (sulfonic acid ion exchange resin, specific brand: 001*7) was selected as a comparison. The specific comparison results are shown in Table 1 below.

**Table 1: Ion exchange experimental test results of different types of ion exchange resins**

| the type of resin | initial cobalt ion concentration (mmol/L) | cobalt ion concentration in the supernatant after 24 hours (mmol/L) | pH value of the supernatant |
|---|---|---|---|
| COOH-type | 140 | 132 | 1.31 |
| 10 g COOH-type resin and 0.1 g NaOH | 140 | 120 | 1.94 |
| 10 g COOH-type resin and 0.2 g NaOH | 140 | 105 | 2.68 |
| 10 g COOH-type resin and 0.3 g NaOH | 140 | 98 | 3.14 |
| 10 g COOH-type resin and 0.4 g NaOH | 140 | 67 | 3.46 |
| 10 g COOH-type resin and 0.5 g NaOH | 140 | 44 | 4.60 |
| 10 g COOH-type resin and 0.6 g NaOH | 140 | 29 | 5.08 |
| 10 g COOH-type resin and 0.7 g NaOH | 140 | 6 | 5.94 |
| 10 g COOH-type resin and 0.8 g NaOH | 140 | 0 | 6.35 |
| COONa-type | 140 | 0 | 9.63 |
| Sulfonic acid-type | 140 | 38 | 0.73 |

In Table 1, taking a resin sample of 10 g COOH-type resin and 0.1 g NaOH as an example, the specific preparation method of the resin sample was as follows: 10 g COOH-type resin was added to 30 g water, and 0.1 g sodium hydroxide was then added, stirred thoroughly, filtered, fully washed with water, and dried to obtain modified resin particles. The remaining resin samples were prepared according to this method. For example, the amount of sodium hydroxide used in the resin sample with 10 g COOH-type resin and 0.2 g NaOH was changed to 0.2 g.

Experimental results showed that with the increasing amount of NaOH, the COOH groups in the ion exchange resin gradually transformed into COO⁻ groups, the concentration of cobalt ions in the supernatant decreased, and the color of the supernatant also changed from red to colorless, indicating that the ion exchange capacity of the COONa-type ion exchange resin was stronger than that of the COOH-type ion exchange resin, and the COO⁻ group mainly played a role in metal ion adsorption capacity.

Further, by comparing equal amounts of the COONa-type ion exchange resin and sulfonic acid-type ion exchange resin and testing the concentration of cobalt ions in the supernatant, it can be seen that the ion diffusion and exchange/adsorption/complexation ability of the COONa-type ion exchange resin is stronger than that of the sulfonic acid-type ion exchange resin.

Embodiments of the present disclosure further provide a method for applying ion exchange resin to electrolytic polishing of metal workpieces. The method includes:
Step 1: placing the prepared solid organic weak acid-type cation exchange resin in an electrochemical polishing device; wherein the metal workpieces to be polished are connected to a positive electrode of a power supply, and the solid organic weak acid-type cation exchange resin is electrochemically connected to a negative electrode of the power supply; and
Step 2: turning on the power supply, wherein the metal workpieces to be polished and the solid organic weak acid-type cation exchange resin undergo relative frictional motion during electrolysis.

The electrochemical polishing device contains a metal mesh cage. After connecting the metal sample to the positive electrode of the electrochemical polishing device, the metal sample was inserted into the metal mesh cage; and the metal mesh cage was respectively connected to the solid organic weak acid-type cation exchange resin and the negative electrode of the electrochemical polishing device.

The insertion method includes stirring or vibration. As a result, the solid organic weak acid-type cation exchange resin in contact with the positive electrode and the negative electrode can be continuously transformed and fully utilized.

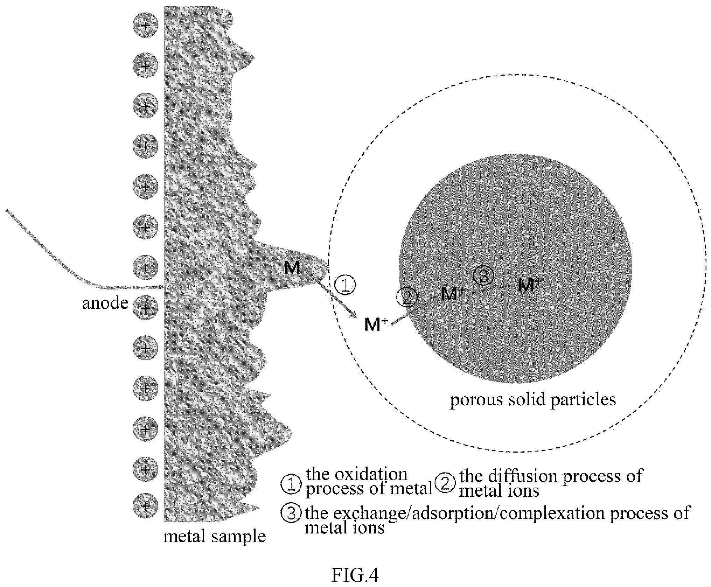

A schematic diagram of the specific principle process of electrolytic polishing of metal using the solid organic weak acid-type cation exchange resin of the present disclosure can be seen in FIG. 4. Referring to the schematic diagram of the principle in FIG. 4, the polishing rate and effect are controlled by the following three steps: 1. the intuitive representation of the oxidation process of metal is a current size (experiments have proven that a current of 0.01 A-100 A is more suitable), and the current size is determined by the applied voltage and the resistance (the resistance of the metal sample and other parts of the entire electrochemical system is much smaller than the resistance of the solid particles, so it is ignored) of the solid particles (organic weak acid-type cation exchange resin); if the applied voltage is lower than the oxidation potential and polarization potential of the metal, then the metal ions cannot be smoothly oxidized and separated from the metal; If the resistance of the solid particles is too large (mainly determined by the resistance and content of the electrolyte solution), the oxidation rate of metal ions will also be very slow and the polishing effect cannot be achieved; 2. the diffusion process of metal ions, which is also one of the speed control steps because it is solid polishing; if the content of the conductive solution is too low, the pore size of the solid particles is too small (smaller than the actual ion hydration particle size or complex particle size), then the polishing effect cannot be achieved; and 3. the exchange/adsorption/complexation process of metal ions, which is mainly determined by the pore volume, the number and type of groups. In the present disclosure, the metal ions used entered into the particles and underwent chelation/complexation/adsorption reaction with the hydroxyl functional groups on the pores of the particles, thereby adsorbing the metal ions in the particles to achieve the function of migrating and fixing metal ions, thereby reducing the concentration of the metal ions on the surface of the metal sample, reducing polarization, accelerating ion migration, and accelerating polishing speed to achieve a bright effect. The present disclosure also confirms that when there is little difference between voltage and particle conductivity, the polishing effect is mainly determined by ion diffusion and exchange/adsorption/complexation capabilities.

In order to further determine the resistance value of the solid organic weak acid-type cation exchange resin that was volatilized in stages and used for electrolytic polishing of metal workpieces, the following experiments were conducted. Taking the COONa-type ion exchange resin as an example, it should be noted that the ion exchange resin containing COOH groups, treated with excessive NaOH solution and fully washed with water, was named COONa-type ion exchange resin. The COONa-type ion exchange resin with a porous structure was soaked and filtered, and then volatilized and dried in stages. Different drying times would lead to different electrolyte contents in the COONa-type ion exchange resin, and the resistance value of the COONa-type ion exchange resin was tested using a multimeter. The results are shown in Table 2.

The test method for the mass content of the electrolyte solution in the COONa-type ion exchange resin was to place the COONa-type ion exchange resin in a blast drying oven at 150°C, and then to calculate the mass content of the electrolyte solution according to the following formula: mass content of electrolyte solution = (weight loss mass ÷ mass of COONa-type ion exchange resin before test) × 100%.

**Table 2: Resistance test results of ion exchange resins with different electrolyte contents**

| Drying time (h) | Electrolyte content (%) | Volume resistance (MΩ) |
|---|---|---|
| 4 | 61.5 | 0.05 |
| 24 | 58.4 | 0.1 |
| 48 | 54.3 | 0.3 |
| 72 | 50.1 | 0.7 |
| 96 | 47.5 | 1.1 |
| 168 | 36.5 | 3.5 |

Since different electrolyte contents will cause changes in the resistance value of ion exchange resin particles, the conductivity of the ion exchange resin can be adjusted by controlling the electrolyte content inside and on the surface of the ion exchange resin, and an ion exchange resin with an appropriate conductivity can be selected for solid electrolytic polishing of metal workpieces.

In order to verify the metal workpieces polishing performance of the organic weak acid-type cation exchange resin containing a certain amount of electrolyte solution inside the pores and/or on the surface of the ion exchange resin, the solid organic weak acid-type cation exchange resin was placed in an electrochemical polishing device in the present disclosure, where the metal workpieces to be polished were connected to the positive electrode of the power supply, and the solid organic weak acid-type cation exchange resin was electrochemically connected to the negative electrode of the power supply to test the polishing performance of the metal workpiece (applied voltage 60V, polishing for 20 minutes). The surface morphology of the metal workpiece was provided by visual observation and scanning electron microscopy. The morphology was characterized and its roughness was tested with an optical profilometer. The results are shown in Table 3. The resin quality, soaking electrolyte concentration, and conductivity used in all tests are consistent. Specifically, the ion exchange resin made with a drying time of 72 hours in Table 2 (electrolyte content was 50.1%, volume resistance was 0.7 MΩ) was used for electrolytic polishing test.

**Table 3: Visual observation results of solid electrolytic polishing of different types of ion exchange resins**

| The type of resin | Polishing brightness of metal workpieces |
|---|---|
| Before polishing | gray |
| COOH-type | gray |
| 10 g COOH-type resin and 0.1 g NaOH | gray |
| 10 g COOH-type resin and 0.2 g NaOH | gray |
| 10 g COOH-type resin and 0.3 g NaOH | gray |
| 10 g COOH-type resin and 0.4 g NaOH | matt |
| 10 g COOH-type resin and 0.5 g NaOH | matt |
| 10 g COOH-type resin and 0.6 g NaOH | matt |
| 10 g COOH-type resin and 0.7 g NaOH | bright |
| 10 g COOH-type resin and 0.8 g NaOH | bright |
| COONa-type | bright |
| Sulfonic acid-type | matt |

As can be seen from Table 3, when ion exchange resins with different proportions of COOH/COO⁻ groups were used in solid electrolytic polishing, the effects were different. Before solid electrolytic polishing, the surface of metal workpieces was gray, and the surface brightness of metal workpieces will be significantly changed by using ion exchange resins with different proportions of COOH/COO⁻ groups, where the COONa-type ion exchange resin had the best solid electrolytic polishing effect. The pore structures and conductivities of these ion exchange resins with different proportions of COOH/COO⁻ groups were the same, however, the polishing effects were greatly different, which further confirmed that the ion exchange/adsorption/complexation process (step 3 in FIG. 4) played an important role on the metal polishing effect.

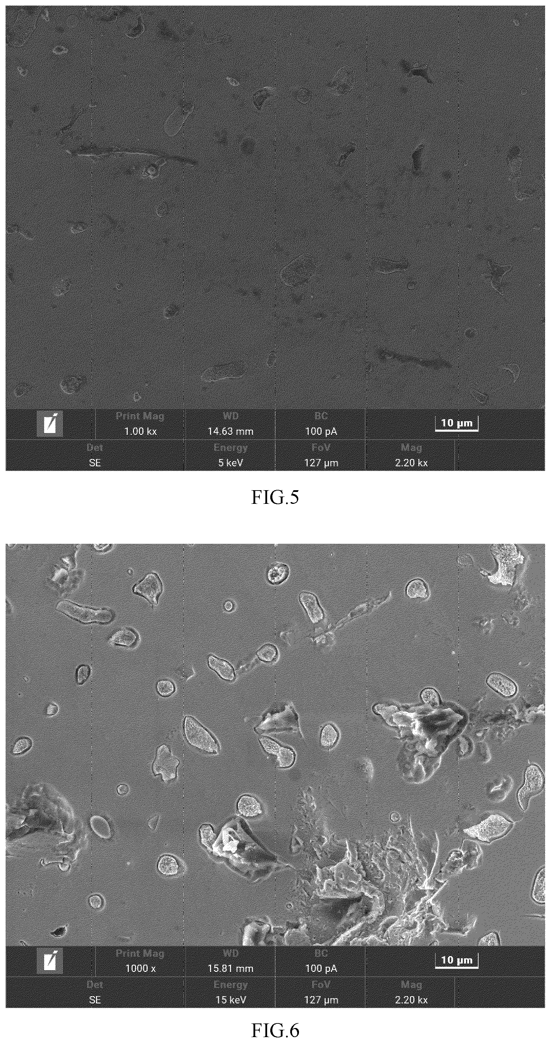

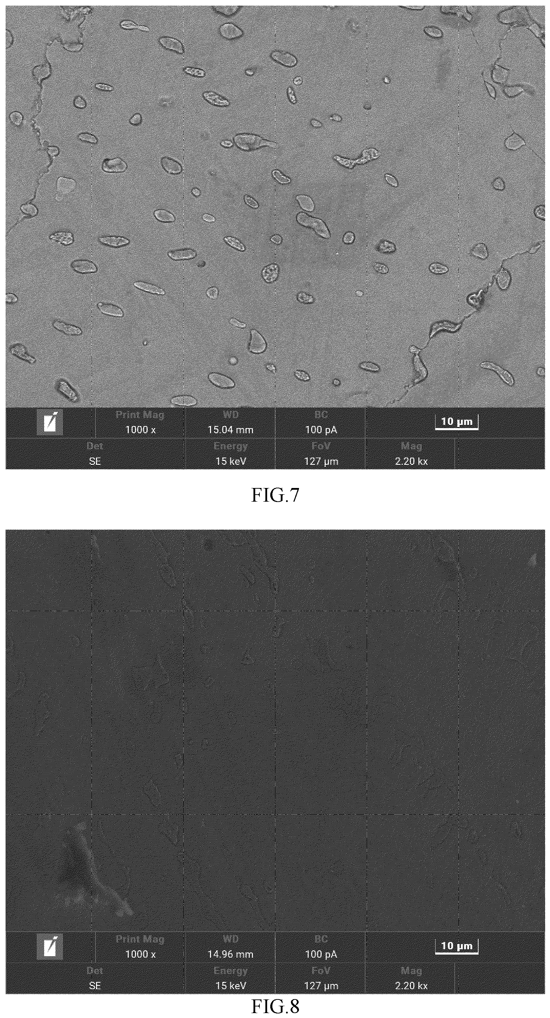

FIG. 5 is a scanning electron microscope image of a metal workpiece before polishing. FIG. 6 is a scanning electron microscope image of a metal workpiece polished with COOH resin. FIG. 7 is a scanning electron microscope image of a metal workpiece polished with 10 g COOH resin and 0.5 g NaOH sample. FIG. 8 is a scanning electron microscope image of a metal workpiece polished with COONa-type resin. It can be seen from FIG. 5-FIG. 8 that as the proportion of COONa resin increased, the surface polishing effect of metal workpieces became better and better. It was further confirmed that more COO⁻ groups would result in a stronger adsorption capacity for metal ions and a better polishing effect. This can be used to adjust the polishing rate and polishing intensity, thereby regulating the polishing effect of metal workpieces.

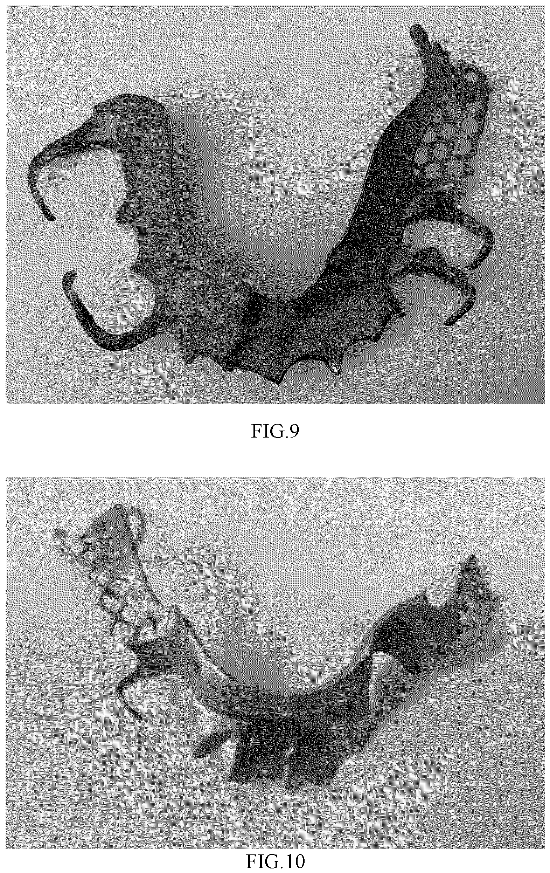

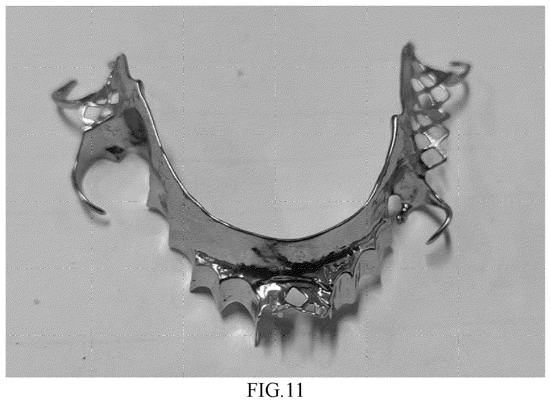

In order to further determine the polishing effect of ion exchange resins with different ratios of COOH/COO⁻ groups, photographic tests were conducted on the metal workpieces before polishing and after polishing. The test results are shown in FIG.9-FIG.11. Among them, FIG. 9 showed the surface morphology of the metal workpiece before polishing, FIG. 10 showed the surface morphology of the metal workpiece after polishing with 10 g COOH-type resin and 0.5 g NaOH sample, and FIG. 11 showed the surface morphology of the metal workpiece after polishing with COONa-type resin. It should be noted here that since the medical 3D printed chromium-cobalt metal sample was used, the shape of the sample had certain differences, but the material was exactly the same. As can be seen from FIG.9-FIG.11, the surface of the metal workpieces after solid electrolytic polishing using COONa resin was bright and smooth, which further showed that the solid electrolytic polishing effect of COONa resin was better.

Furthermore, the present disclosure further used an optical profilometer to test the surface roughness of the metal workpiece after solid electrolytic polishing. The test results are shown in Table 4 below.

**Table 4: Roughness test results of solid electrolytic polishing with different types of ion exchange resins**

| The type of resin | The roughness of metal workpiece Ra (µm) |
|---|---|
| Sample before polishing (grey) | 4.082 |
| COOH-type polishing (grey) | 4.026 |
| 10 g COOH-type resin and 0.5 g NaOH (matt) | 1.656 |
| COONa-type polishing (bright) | 0.419 |
| Sulfonic acid type (matt) | 1.328 |

The test results showed that as the proportion of COONa resin increased, the surface roughness of the metal workpiece became smaller and smaller, indicating that the surface polishing effect was better. It should be noted here that since the surface of the metal workpiece itself was concave and convex, the Ra value was larger than that of a flat sample.

The organic weak acid-type cation exchange resin provided by the embodiments of the present disclosure had good polishing effect when used in solid electrolytic polishing of metal workpiece(s). In addition, by regulating the weak acid groups in the organic weak acid-type cation exchange resin, the polishing effect of the metal workpiece(s) could be further controlled.

The above embodiments are preferred implementations in the present disclosure, but the present disclosure is not limited to the above embodiments. Any other changes, modifications, substitutions, combinations, or simplifications made without departing from the essence and principles of the present disclosure should be equivalent substitution methods and are all included within the scope of protection of the present disclosure.

## Claims

1. An ion exchange resin used in solid electrolytic polishing of a metal workpiece, **characterized in that** the ion exchange resin is an organic weak acid-type cation exchange resin with a porous structure; and the ion exchange resin contains an electrolyte inside pores and/or on the surface of the ion exchange resin.

2. The ion exchange resin according to claim 1, **characterized in that** the organic weak acid-type cation exchange resin includes at least one of an acrylic acid-type cation exchange resin, an oxalic acid-type cation exchange resin, a citric acid-type cation exchange resin, a salicylic acid-type cation exchange resin or an ethylene diamine tetraacetic acid-type cation exchange resin.

3. The ion exchange resin according to claim 2, **characterized in that** the acrylic acid-type cation exchange resin is a carboxylic acid-type ion exchange resin containing a COOH group or a COO⁻ group; and
a ratio of the COOH group and the COO⁻ group is adjusted by a type of raw materials for preparing the ion exchange resin and/or the pH value of the electrolyte.

4. The ion exchange resin according to claim 1 or 2, **characterized in that** the ion exchange resin has a particle size ranging from 0.01 mm to 10 mm.

5. The ion exchange resin according to claim 1, **characterized in that** the electrolyte is able to adjust conductivity of the ion exchange resin.

6. The ion exchange resin according to claim 1 or 5, **characterized in that** an electrolyte mass content inside the pores and/or on the surface of the ion exchange resin is 15% to 80%.

7. The ion exchange resin according to claim 1 or 5, **characterized in that** the electrolyte includes at least one of water, acid solution, alkaline solution, or salt solution.

8. The ion exchange resin according to claim 7, **characterized in that** in the electrolyte, an acid of the acid solution includes at least one of H₂SO₄, HCl, H₃PO₄, HNO₃ or HF; an alkali of the alkali solution includes at least one of NaOH or KOH; and a salt of the salt solution includes at least one of soluble chlorine salt, fluoride salt, sulfate, phosphate, nitrate, or a salt of ethylene diamine tetraacetic acid.

9. A method for preparing the ion exchange resin according to any one of claims 1 to 8, **characterized in that**, including the steps of:
soaking the organic weak acid-type cation exchange resin with a porous structure in the electrolyte, adjusting the pH value of the electrolyte, and then filtering and volatilizing the electrolyte to obtain the ion exchange resin.

10. A method for solid electrolytic polishing of a metal workpiece using the ion exchange resin according to any one of claims 1 to 8, **characterized in that**, including the steps of:
S1: placing the ion exchange resin and the metal workpiece to be polished in an electrochemical polishing device;
wherein the metal workpiece to be polished are connected to a positive electrode of a power supply of the electrochemical polishing device, and the ion exchange resin is connected to a negative electrode of the power supply of the electrochemical polishing device; and
S2: powering the electrochemical polishing device on to perform electrolytic polishing, wherein the metal workpiece to be polished and the ion exchange resin undergo relative frictional motion during electrolytic polishing.
